# EUROPEAN PATENT SPECIFICATION

(11) **EP 1 020 310 B1**
(45) Date of publication and mention of the grant of the patent: **14.06.2006**
(21) Application number: 99938399.5
(22) Date of filing: 30.07.1999
(51) Int. Cl.: B60J 5/00

(54) **SIMPLIFIED WINDOW-RAISER -**
VEREINFACHTE FENSTERKURBEL
LEVE-VITRE SIMPLIFIE

(30) Priority: 30.07.1998 ES 9801622
(43) Date of publication of application: 19.07.2000
(73) Proprietor: Grupo Antolin Ingenieria, S.A., 09007 Burgos (ES)
(72) Inventor: BARRERO SERRANO, Felipe, E-09007 Burgos (ES); MARTINEZ MORAL, Francisco Javier, E-09004 Burgos (ES)
(74) Representative: Esteban Perez-Serrano, Maria Isabel
(86) International application number: PCT/ES1999/000246
(87) International publication number: WO 2000/009354

(56) References cited:
- DE-A- 3 136 890
- DE-U- 8 505 490
- ES-A- 2 089 950
- US-A- 2 987 937
- US-A- 4 338 747
- US-A- 5 074 077

## Description

This invention relates to a simplified window winder device applicable for raising or lowering the window pane in the doors of automobile vehicles.

Window winder devices are known that include several items, such as the guide slide, manual or electric drive, spirals, nozzles, tension adjuster springs, etc., of the Bowden system, cable direction changing units, units for securing the-device to the vehicle, etc. In these known window winder devices, the components described are usually incorporated during the assembly of the devices into the door of the vehicle.

From document ES-A-2 089 950 a window winder device according to the preamble of claim 1 is known.

All this is a great disadvantage as it means an additional cost, which is substantial in the economic calculation of the device, not only from the point of view of storage and transport but also in other stages of its life.

One object of this invention is to provide a window winder device that totally integrates the cable direction changing items and also the items for securing the system to the rest of the vehicle in one single part.

Another object of the invention is to provide a window winder device that includes the drive motor in such a way that it enables the elimination of the different components of the Bowden system, such as spirals, nozzles and tension adjuster springs, all of which results in the greater economy of the system.

Another object of the invention is to provide a window winder devide that, by integrating different items into the assembly itself, achieves a substantial reduction in costs, both in storage and transport and in other stages of the life of the device, manufacture, assembly or repair.

In order to achieve these objectives of the invention, the simplified window winder device has the features of claim 1. Accordingly, it is composed of three fundamental parts, which are:
- A rail, with the cable direction changing systems, the supports between the system and the rest of the vehicle and a special portion to suitably receive the motor for the system, all of which is carried out in one single constituent part.
- A slide that acts as the union between the window winder device and the window pane in the door of the vehicle.
- A motor casing that, while connected to the system motor itself, is also used for positioning the said motor in the rail and for tightening this system, when it is situated on the special portion of the rail.
   Apart from this, the window winder device has a cable suitably arranged in the rail for the movement of the window pane secured and moved by the slide.
   The rail is an elongated longitudinal item at whose ends are situated the necessary devices in order to procure the change of direction of the cable which has to make the window pane holder slide circulate or move along it. Besides this, the rail itself contains the items for securing the rail to the door or to the rest of the vehicle, as well as a special projecting portion for housing the motor.
   This special portion has a hole through it in the portion closest to its end when starting from the rail itself and two concentric curved cut-outs or slots of different diameters housed distinctly in relation to the position of the said hole, which for all effects acts as the pivotal centre in relation to the two slots.
   The cut-out with the larger diameter is provided with a toothed or serrated area in its interior which, as will be explained, later, is used in order to maintain the angular position desired of the motor during the assembly of the window winder device.
   The electric motor to drive the slide by means of the corresponding cable is connected, in accordance with the invention, to a special casing. This casing, made of plastic material, is joined to the motor by means of two bolts that each pass through holes in the body of the said plastic casing.
   In the same way, the casing has another three holes through which the corresponding two bolts pass through that will circulate along the larger cut-out in the projection from the rail and a third bolt which, by means of another screw, will occupy the position of the hole in the projection from the rail closest to the said rail, thus performing the functions of the pivotal centre point.
   In the centre of the plastic casing, approximately, another hole is provided, together with its corresponding bolt, which coincides in position with the hole in the smaller cut-out in the special projection from the rail.
   At the opposite end of the pivotal centre of the plastic casing and between the two bolts in the casing that move in the larger cut-out, a toothed plastic spring is provided that forms a single unit with the casing, and which makes contact with the toothed interior that the larger cut-out on the rail is equipped with.
   Once the motor has been fixed to this plastic casing, the motor and plastic casing assembly is presented over the projection from the rail in such a way that the larger cut-out of this projection coincides with the corresponding bolts, the smaller cut-out coincides with the central bolt in the casing and the end bolt coincides with the circular hole in the projection from the rail.
   At the same time, the correspondence between the toothed part of the projection in the larger cut-out is carried out appropriately during assembly, so that once the angular position desired has been achieved by turning the casing suitably on the cut-outs, the said correspondence between the toothed areas allows the said angular position to be maintained while the tightening of the bolts corresponding to the projection from the rail is carried out, so as to completely fix the position of the motor and casing on the rail.
   All the details and advantageous particularities of the window winder device in accordance with the invention will be appreciated more clearly by referring to the sheet of drawings which is attached, in which the following are represented for informative purposes only.
- Figure 1 is an elevational view of the plastic rail in accordance with the invention.
- Figure 2 is another elevational view corresponding to the opposite side of the rail shown in Figure 1.
- Figure 3 is a bottom view of Figure 1.
- Figure 4 is a plan-view of the plastic casing.

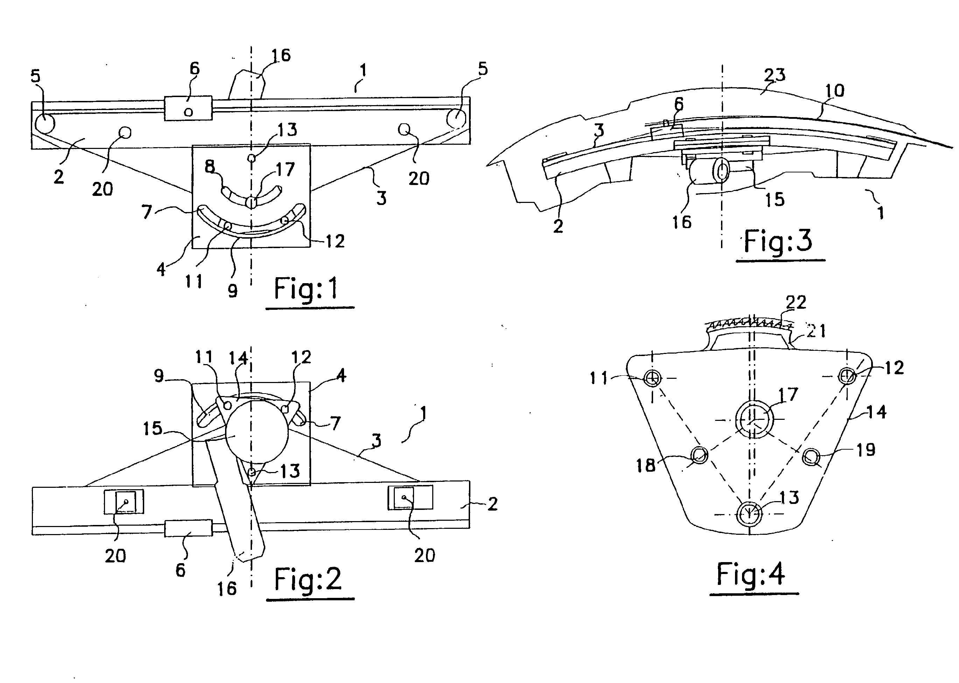

Looking now at Figure 1, it is possible to appreciate the rail (1) in accordance with the invention, preferably made of plastic material, which is a single part that includes a guide area (2) for the window pane holder slide, ends with the devices (5) for changing the direction of the cable, supports (20) for securing or fixing the rail (1) to the vehicle and the projection (4).

In the same Figure 1, we can also observe the cable (3), which is operated by the motor, and the slide (6), which is connected to the cable and incorporates the window pane for the door.

In the projection it is necessary to mention the hole (13) close to the guide (2) for the rail and the two concentric cut-outs (8, 7) that have their common centre at the previously mentioned position (13). The larger cut-out (8) has a toothed area (9) in its interior.

According to Figure 2, we can observe the items previously mentioned, with the presence of the motor (15, 16) arranged on the projection (4) by means of the plastic casing (14) secured to the said projection, as well as the path of the cable (3) operated by the motor.

Figure 3 emphasises the relationship between the assembly in the invention and the rest of the vehicle (23), as well as the window pane (10) connected to the slide, which moves inside the door of the vehicle when the motor (15, 16) operates the cable (3) and moves the slide (6).

In accordance with Figure 4, the plastic casing (14) is equipped with holes (18, 19) through which the motor (15, 16) is fixed to the casing. A shaft, which can also be observed in Figures 1 and 2, passes through the lower hole (13). The casing with the motor on the projection (4) can turn on this shaft.

By means of the bolts in the positions (11, 12), the casing (14) can slide in the larger cut-out (7) in the projection (4) from the plastic rail (1) and by means of the central bolt (17) can slide in the smaller cut-out (8) until the said bolts are completely tightened.

Therefore, on placing the plastic casing (14) on the projection (4), the casing-motor assembly can turn on the point (13) in order to achieve any angular position. However, as the casing (14) is provided with the toothed (22) plastic spring (21) between the positions of the two bolts (11, 12), it happens that this toothed part (22) makes contact with the toothed area (9) of the larger cut-out (7) of the projection (4), so that once the exact convenient angular position of the motor has been achieved as regards its correct tightening in relation to the cable (3) and the slide (6), the connection between both toothed areas maintains this position until the bolts (11, 12, 17) are properly screwed down to the rail, thus preventing any displacement from the desired position, all of which is illustrated in Figures 1 and 2.

In this way, the window winder device described has a configuration such that, by having the motor integrated, it allows the elimination of the different items of the Bowden system - spirals, nozzles and tension adjuster springs - as already mentioned previously, all of which results in the greater economy of the system.

The different items in the system can be joined together by welding, riveting, bolting, adhesives or any other means of connection available.

It is also possible to make the different integrated items of different materials or of different thicknesses, thus achieving improvements with regard to the absorption of energy in the event of side impacts and a greater control of the rigidity of the structure.

## Claims

1. Simplified window winder device, which has a rail (1), a drive motor (15,16) for a cable (3) and a slide (6) that moves along said rail (1) that is connected to the window pane (10) of the window winder device wherein the slide (6) has some guide portions to move along the rail (1), another portion to connect with the window pane (10) and a third portion, consisting of two parts, in order to allow the housing of the two ends of the cable (3) that come directly from the motor (15,16), which is **characterised in that**:
- the rail (1) includes in itself the systems for changing the direction of the cable (3) and several supports for fixing the rail (1) to the door of the vehicle (23) and has also two circular cut-outs (7, 8) and a shaft to receive a motor support casing (14), with one (7) of the cut-outs (7,8) being equipped with a toothed area (9),
- the casing (14) that receives the motor (15,16) has two evenly separated holes (18, 19) in order to allow the fixing bolts for the said motor (15,16) to pass through, and other holes (11, 12) that correspond with the circular cut-outs (7,8) of the rail (1) in order to receive the corresponding bolts (11,12,17) that fix said casing (14) to said rail (1), as well as an end (21) with a portion that corresponds by way of a toothed plastic spring (22) with the similar toothed area (9) cut into the rail (1), and a shaft also in correspondence with the said toothed area (9) of the rail (1).

2. Simplified window winder device, in accordance with claim 1, **characterised in that** the rail (1) the casing (14) and the slide (6) are made of plastic material.

3. Simplified window winder device in accordance with claim 1, **characterised in that** the different items, rail (1), casing (14) and slide (6) are made of different materials or of different thicknesses.

## Patentansprüche

1. Vereinfachtes Fensterhebesystem, das über eine Führung (1) verfügt, einen Antriebsmotor (15, 16 für ein Kabel (3) und einem Gleitblock (6), der auf besagter Führung (1) entlangläuft, die mit der Fensterscheibe (10) des Fensterhebesystems verbunden ist, wobei der Gleitblock (6) einige Führungsteile aufweist, um sich auf der Führung (1) entlangzubewegen und einen weiteren Teil, um mit der Fensterscheibe (10) zu verbinden und einen dritten Teil, der aus zwei Teilen besteht, um die zwei Enden des Kabels (3) aufzunehmen, die direkt vom Motor (15, 16) kommen, **dadurch gekennzeichnet, dass**:
- die Führung (1) in sich selbst die Systeme umfasst, um die Richtung des Kabels (3) zu wechseln und mehrere Halterungen, um die Führung (1) an der Tür des Fahrzeugs (23) zu befestigen und sie hat ausserdem zwei runde Aussparungen (7,8) und einen Schaft, um ein Motoraufnahmegehäuse (14) aufzunehmen, wobei eine der Aussparungen (7,8) mit einem gezahnten Bereich (9) ausgestattet ist,
- das Gehäuse (14), das den Motor (15,16) aufnimmt, hat zwei Löcher (18, 19) im gleichen Abstand, um Befestigungsbolzen für den besagten Motor (15, 16) durchzulassen und andere Löcher (11, 12), die mit den runden Aussparungen (7, 8) der Führung (1) übereinstimmen, um die entsprechenden Bolzen (11, 12, 17) aufzunehmen, die das besagte Gehäuse (14) an der besagten Führung (1) befestigen, sowie ein Ende (21), mit einem Teil, das mittels einer gezahnten Plastikfeder (22) mit dem ähnlich gezahnten Bereich (9) übereinstimmt, der in die Führung (1) geschnitten ist und ein Schaft, auch in Übereinstimmung mit dem besagten gezahnten Bereich (9) der Führung (1).

2. Vereinfachtes Fensterhebesystem gemäss Anspruch 1, **dadurch gekennzeichnet, dass** die Führung (1), das Gehäuse (14) und der Gleitblock (6) aus Plastik gemacht sind.

3. Vereinfachtes Fensterhebesystem gemäss Anspruch 1, **dadurch gekennzeichnet, dass** die verschiedenen Elemente, Führung (1), Gehäuse (14) und Gleitblock (6) aus verschiedenen Materialien bestehen und verschieden dick sind.

## Revendications

1. Dispositif enrouleur de fenêtre simplifié, qui a une glissière (1) un moteur d'entraînement (15, 16) pour un câble (3) et un chariot (6) qui se déplace le long d'une glissière (1) qui est connecté à la vitre de fenêtre (10) du dispositif enrouleur de fenêtre, dans lequel le chariot (6) a des parties de guidage pour se déplacer le long du rail (1), une autre partie pour connecter avec la vitre de fenêtre (10) et une troisième partie consistant en deux pièces, afin de permettre que le logement des deux extrémités du câble (3) qui viennent directement du moteur (15, 16), lequel est **caractérisé en ce que** :
- ladite glissière (1) inclue en soi-même les systèmes pour changer la direction du câble (3) et plusieurs supports pour fixer la glissière (1) à la porte du véhicule (23) et elle a également deux découpes (7, 8) circulaires et un arbre pour recevoir une carcasse (14) de support de moteur, une (17) des découpes (7, 8) étant pourvue d'une zone dentée (9),
- la carcasse (14) qui reçoit le moteur (15, 16) a des trous (18, 19) séparés régulièrement afin de permettre que les boulons de fixation pour ledit moteur (15, 16) passent à travers eux, et d'autres trous (11, 12) qui correspondent aux découpes (7, 8) circulaires de la glissière (1) afin de recevoir les boulons (11, 12, 17) correspondants qui fixent ladite carcasse (14) à ladite glissière (1) ainsi qu'une extrémité (21) à une partie qui correspond au moyen d'un ressorte (22) denté en plastique à la zone (9) dentée similaire découpée dans la glissière (1), et un arbre également en correspondance avec ladite zone (9) dentée de la glissière (1).

2. Dispositif enrouleur de fenêtre simplifié, selon la revendication 1, **caractérisé en ce que** la glissière (1), la carcasse (14) et le chariot (6) sont fait en matière plastique.

3. Dispositif enrouleur de fenêtre simplifié, selon la revendication 1, **caractérisé en ce que** les différents éléments, glissière (1), carcasse (14) et chariot (6) sont fait de différentes matières ou de différente épaisseur.
